# EUROPEAN PATENT SPECIFICATION

(11) **EP 3 531 608 B1**
(45) Date of publication and mention of the grant of the patent: **27.08.2025**
(21) Application number: 18736008.6
(22) Date of filing: 08.01.2018
(51) Int. Cl.: H04L 5/00, H04L 27/26

(54) **METHOD AND DEVICE FOR TRANSMITTING REFERENCE SIGNAL**
VERFAHREN UND VORRICHTUNG ZUR ÜBERTRAGUNG VON REFERENZSIGNALEN
PROCÉDÉ ET DISPOSITIF POUR TRANSMETTRE UN SIGNAL DE RÉFÉRENCE

(30) Priority: 06.01.2017 CN 201710010855
(43) Date of publication of application: 28.08.2019
(73) Proprietor: Huawei Technologies Co., Ltd., Longgang District Shenzhen, Guangdong 518129 (CN)
(72) Inventor: SUN, Yu, Shenzhen Guangdong 518129 (CN); QIN, Yi, Shenzhen Guangdong 518129 (CN); LI, Zhongfeng, Shenzhen Guangdong 518129 (CN)
(74) Representative: Isarpatent
(86) International application number: PCT/CN2018/071784
(87) International publication number: WO 2018/127180

(56) References cited:
- CN-A- 101 483 466
- CN-A- 101 534 285
- CN-A- 101 594 335
- CN-A- 105 791 200
- US-A1- 2010 254 471
- INTEL CORPORATION: "On Phase Tracking for NR", vol. RAN WG1, no. Reno, USA; 20161114 - 20161118, 13 November 2016 (2016-11-13), XP051175945, Retrieved from the Internet <URL:http://www.3gpp.org/ftp/Meetings_3GPP_SYNC/RAN1/Docs/> [retrieved on 20161113]
- NATIONAL INSTRUMENTS: "Study of Time and Frequency Density of Phase Noise RS", vol. RAN WG1, no. Reno, USA; 20161114 - 20161118, 13 November 2016 (2016-11-13), XP051176569, Retrieved from the Internet <URL:http://www.3gpp.org/ftp/Meetings_3GPP_SYNC/RAN1/Docs/> [retrieved on 20161113]
- HUAWEI HISILICON: "Reference signal design for phase tracking", vol. RAN WG1, no. Reno, USA; 20161114 - 20161118, 13 November 2016 (2016-11-13), XP051175221, Retrieved from the Internet <URL:http://www.3gpp.org/ftp/Meetings_3GPP_SYNC/RAN1/Docs/> [retrieved on 20161113]
- NTT DOCOMO INC: "Views on RS for phase tracking", vol. RAN WG1, no. Reno, USA; 20161114 - 20161118, 13 November 2016 (2016-11-13), XP051176663, Retrieved from the Internet <URL:http://www.3gpp.org/ftp/Meetings_3GPP_SYNC/RAN1/Docs/> [retrieved on 20161113]
- LG ELECTRONICS: "Discussion on Phase Tracking RS for Multi-Antenna", vol. RAN WG1, no. Reno, USA; 20161114 - 20161118, 13 November 2016 (2016-11-13), XP051175780, Retrieved from the Internet <URL:http://www.3gpp.org/ftp/Meetings_3GPP_SYNC/RAN1/Docs/> [retrieved on 20161113]

## Description

### TECHNICAL FIELD

This application relates to the field of mobile communications technologies, and in particular, to a reference signal transmission method, a base station, a terminal, a communications apparatus, a computer readable storage medium and a computer program product.

### BACKGROUND

With the development of mobile communications technologies, demands on a communication rate and capacity are growing. The 3rd Generation Partnership Project (The 3rd Generation Partnership Project) 3GPP incorporates a high frequency band into the consideration of system design in a next-generation evolved radio (New Radio, NR) system. In a radio system, for example, a local oscillator in a base station or a terminal is not ideal, and random jitter of the local oscillator causes phase noise (phase noise, PN) of an output carrier signal. With the increase of a carrier frequency, power of the phase noise increases. Therefore, impact of the phase noise cannot be ignored, and the phase noise needs to be estimated at the receive end by using a reference signal.

For example, a phase compensation reference signal (Phase noise Compensation Reference Signal, PCRS) may be used to estimate the phase noise. The phase compensation reference signal needs to be mapped to a time-frequency resource for transmission. In the prior art, the phase compensation reference signal occupies a relatively large quantity of time-frequency resources.

3GPP contribution R1-1611981, "On Phase Tracking for NR" from Intel Corporation provides some evaluations and discussions on Tracking Reference Signal (TRS) which can be used for phase noise compensation.

3GPP contribution R1-1612624, "Study of Time and Frequency Density of Phase Noise RS" from National Instruments makes observations and proposals on the performance of CPE compensation based on e.g. PNRS frequency density of subcarriers.

3GPP contribution R1-1611240, "Reference signal design for phase tracking" from Huawei Hisilicon discusses the requirements on and the associated design principles for the RS for phase tracking and provides views on whether/how to use DM-RS/other/new RS for this purpose.

3GPP contribution R1-1612720, "Views on RS for phase tracking" from NTT DOCOMO INC. provides views on issues toward RS for phase tracking.

### SUMMARY

This application provides a reference signal sending method according to claim 1, a reference signal receiving method according to claim 3, a base station according to claim 5, a terminal according to claim 7, a communications apparatus according to claim 9, a communications apparatus according to claim 11, a computer readable storage medium according to claim 14, and a computer program product according to claim 15, to reduce a quantity of time-frequency resources occupied by a reference signal. Further advantageous embodiments and improvements of the present invention are listed in the dependent claims.

### BRIEF DESCRIPTION OF DRAWINGS

To describe the technical solutions in the embodiments of the present invention or in the prior art more clearly, the following briefly describes the accompanying drawings required for describing the embodiments or the prior art.
FIG. 1 is a schematic structural diagram of a possible system for implementing an embodiment of the present invention;
FIG. 2 is a flowchart of a reference signal transmission method according to an embodiment of the present invention;
FIG. 3 is another schematic diagram of reference signal resource mapping according to an embodiment of the present invention;
FIG. 4 is another schematic diagram of reference signal resource mapping according to an embodiment of the present invention;
FIG. 5 is another schematic diagram of reference signal resource mapping according to an embodiment of the present invention;
FIG. 6 is another schematic diagram of reference signal resource mapping according to an embodiment of the present invention;
FIG. 7 is another schematic diagram of reference signal resource mapping according to an embodiment of the present invention;
FIG. 8 is another schematic diagram of reference signal resource mapping according to an embodiment of the present invention;
FIG. 9 is another flowchart of a reference signal transmission method according to an embodiment of the present invention;
FIG. 10 is another schematic diagram of reference signal resource mapping according to an embodiment of the present invention;
FIG. 11 is a schematic structural diagram of a base station according to an embodiment of the present invention; and
FIG. 12 is a schematic structural diagram of a terminal according to an embodiment of the present invention.

### DESCRIPTION OF EMBODIMENTS

The following describes in detail the embodiments provided in the present invention with reference to the accompanying drawings. A network architecture and a service scenario are described in the embodiments of the present invention to explain the technical solutions in the embodiments of the present invention more clearly, and do not constitute any limitation to the technical solutions provided in the embodiments of the present invention. A person of ordinary skill in the art may learn that with evolution of network architectures and appearance of new service scenarios, the technical solutions provided in the embodiments of the present invention are also applicable to a similar technical problem.

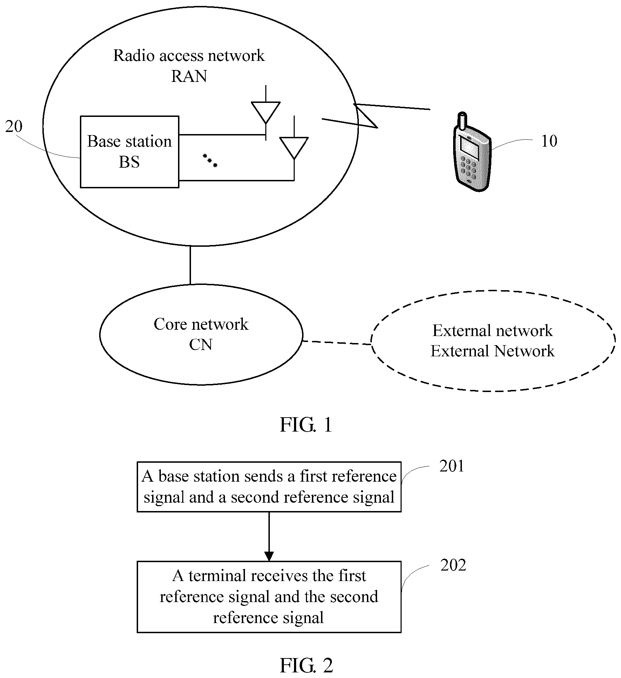

FIG. 1 is a schematic diagram of a possible system network according to the present invention. As shown in FIG. 1, at least one terminal 10 communicates with a radio access network (Radio access network, RAN for short). The RAN includes at least one base station 20 (base station, BS for short). For clear description, only one base station and one UE are shown in the figure. The RAN is connected to a core network (core network, CN for short). Optionally, the CN may be coupled to one or more external networks (External Network), for example, the Internet and a public switched telephone network (public switched telephone network, PSTN for short).

For ease of understanding, the following describes some nouns in this application.

In this application, nouns "network" and "system" are usually used interchangeably, but a person skilled in the art may understand their meanings. User equipment (English: User Equipment, UE for short) is a terminal device having a communication function, may also be referred to as a terminal, and may include a handheld device, an in-vehicle device, a wearable device, or a computing device that has a wireless communication function, another processing device connected to a wireless modem, or the like. In different networks, user equipment may be referred to as different names, for example, a terminal, a mobile station, a subscriber unit, a station, a cellular phone, a personal digital assistant, a wireless modem, a wireless communications device, a handheld device, a laptop computer, a cordless phone, or a wireless local loop station, which is referred to as user equipment UE or a terminal in this application for ease of description. A base station (base station, BS for short) may also be referred to as a base station device and is a device deployed in the radio access network to provide a wireless communication function. In different radio access systems, names of the base station may be different. For example, a base station is referred to as a NodeB (NodeB) in a Universal Mobile Telecommunications System (Universal Mobile Telecommunications System, UMTS for short) network; a base station in an LTE network is referred to as an evolved NodeB (evolved NodeB, eNB or eNodeB for short); and in a future 5G system, a base station may be referred to as a transmission reception point (Transmission Reception Point, TRP).

An embodiment of the present invention provides a reference signal transmission method. The method may be applied to the system shown in FIG. 1. As shown in FIG. 2, the method includes the following steps.

Step 201: A base station sends a first reference signal and a second reference signal.

The first reference signal is sent by using a first group of antenna ports, the second reference signal is sent by using a second group of antenna ports, the first group of antenna ports include at least two antenna ports, and the second group of antenna ports include at least two antenna ports.

Second reference signals are mapped to a same time-frequency resource, or
second reference signals sent on the at least two antenna ports in the second group of antenna ports are mapped to a same time-frequency resource.

Optionally, the first reference signal is used for channel estimation, and the second reference signal is used to estimate phase noise, phase deflection, or a frequency offset.

Step 202: A terminal receives the first reference signal and the second reference signal.

Optionally, after receiving the first reference signal and the second reference signal, the terminal may use the first reference signal for channel estimation, and use the second reference signal to estimate the phase noise, or use the first reference signal and the second reference signal to estimate the phase noise.

In this embodiment of the present invention, reference signals of a plurality of ports are mapped to a same time-frequency resource, thereby reducing a quantity of time-frequency resources occupied by the reference signals.

Optionally, in the foregoing method, the first reference signal may be referred to as a demodulation reference signal (demodulation reference signal, DMRS), and the second reference signal may be referred to as a phase tracking reference signal (phase tracking reference signal, PTRS) or a phase compensation reference signal (phase noise compensation reference signal, PCRS).

The following further describes a correspondence between the second group of antenna ports and the time-frequency resource by using examples.

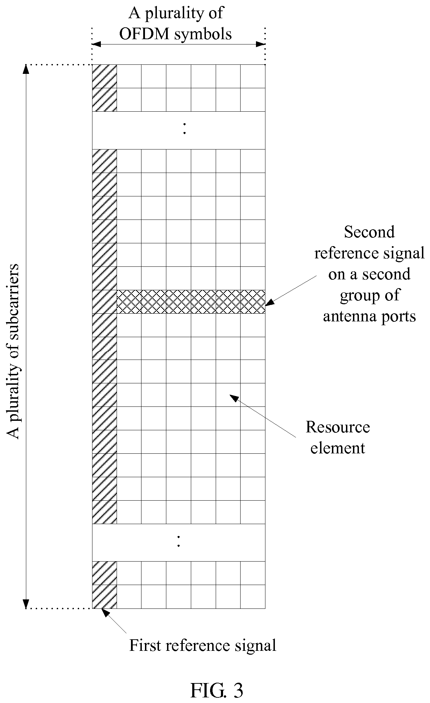

For example, as shown in FIG. 3, second reference signals on all antenna ports of a second group of antenna ports are mapped to a same time-frequency resource.

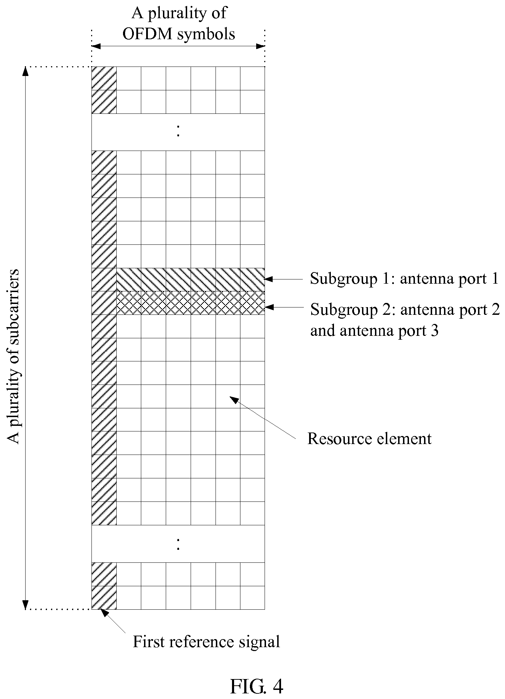

Alternatively, as shown in FIG. 4, a second group of antenna ports include two or more subgroups, second reference signals on each subgroup of antenna ports are mapped to a same time-frequency resource, and second reference signals of different subgroups are mapped to different time-frequency resources.

Optionally, the foregoing method may further include: sending, by the base station, first signaling, where the first signaling indicates a correspondence between the first group of antenna ports and the second group of antenna ports.

Optionally, a correspondence between two groups of antenna ports may indicate two types of correspondences.

In a first type of correspondence, corresponding antenna ports have same phase noise. In a second type of correspondence, corresponding antenna ports have a same equivalent channel or same precoding, where the same equivalent channel or the same precoding may be predefined, for example, antenna port numbers are the same.

Optionally, the base station divides DM-RS antenna ports and PT-RS antenna ports into groups. In a same group, there are both a DM-RS port and a PT-RS port. Antenna ports (including PT-RS antenna ports and DM-RS antenna ports) that belong to a same group are considered to have same phase noise. The base station sends signaling to UE to indicate group division information. The signaling may be radio resource control signaling or physical layer control signaling that is configured by a higher layer, and the UE determines group division of antenna ports based on the signaling.

Optionally, the foregoing method may further include: sending, by the base station, second signaling, where the second signaling indicates that the first reference signal and the second reference signal belong to a same reference signal type or have a quasi co-location QCL relationship.

Optionally, in this embodiment of the present invention, the QCL relationship means that reference signals corresponding to antenna ports of reference signals have a same parameter, or the QCL relationship means that a terminal may determine, based on a parameter of an antenna port, a parameter of another antenna port having the QCL relationship with the antenna port, or the QCL relationship means that two antenna ports have a same parameter, or the QCL relationship means that a difference between parameters of two antenna ports is less than a specific threshold. The parameter may be at least one of delay spread, Doppler spread, a Doppler shift, an average delay, average gain, an angle of arrival (Angle of arrival, AOA), an average AOA, AOA spread, an angle of departure (Angle of Departure, AOD), an average angle of departure AOD, AOD spread, a receiving antenna spatial correlation parameter, a transmit antenna spatial correlation parameter, a transmit beam, a receive beam, and a resource identifier. The beam includes at least one of the following: precoding, a weight sequence number, and a beam sequence number. The angle may be decomposed values at different dimensions, or a combination of decomposed values at different dimensions. The antenna ports are antenna ports with different antenna port numbers, and/or antenna ports that have a same antenna port number and that perform information sending or receiving in different time and/or frequencies and/or code domain resources, and/or antenna ports that have different antenna port numbers and that perform information sending or receiving in different time and/or frequencies and/or code domain resources. The resource identifier includes a channel state information-reference signal (Channel State Information Reference Signal, CSI-RS) resource identifier or an SRS resource identifier, which is used to indicate a beam on a resource.

Optionally, the foregoing method may further include: sending, by the base station, third signaling, where the third signaling indicates a reference signal type of the first reference signal and a reference signal type of the second reference signal. The reference signal type may include at least one of the following: reference signal precoding, a channel response, and a downlink transmit beam.

Optionally, in the foregoing method, a quantity of subcarriers to which the second reference signal is mapped in different scheduled bandwidth ranges is one or more constants, or a quantity of subcarriers to which the second reference signal is mapped in different system bandwidth ranges is one or more constants.

Optionally, the quantity of subcarriers may be configured or predefined by the base station.

Optionally, the base station may send signaling to indicate that the second reference signal is cell-specific, or UE group-specific, or UE-specific. The following further describes a mapping relationship between the second reference signal and subcarriers by using examples.

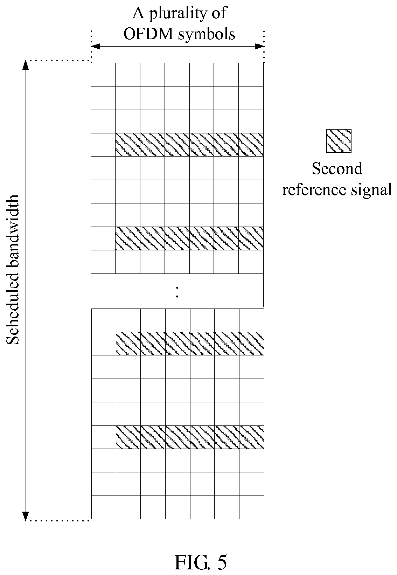

For example, as shown in FIG. 5, second reference signals are distributed within scheduled bandwidth. Regardless of a change of the scheduled bandwidth, a quantity of subcarriers occupied by the second reference signal is constant, for example, four subcarriers.

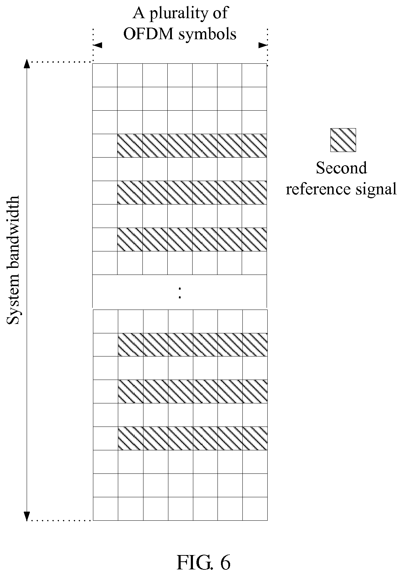

For example, as shown in FIG. 6, second reference signals are distributed within system bandwidth. Regardless of a change of the system bandwidth, a quantity of subcarriers occupied by the second reference signal is constant, for example, six subcarriers.

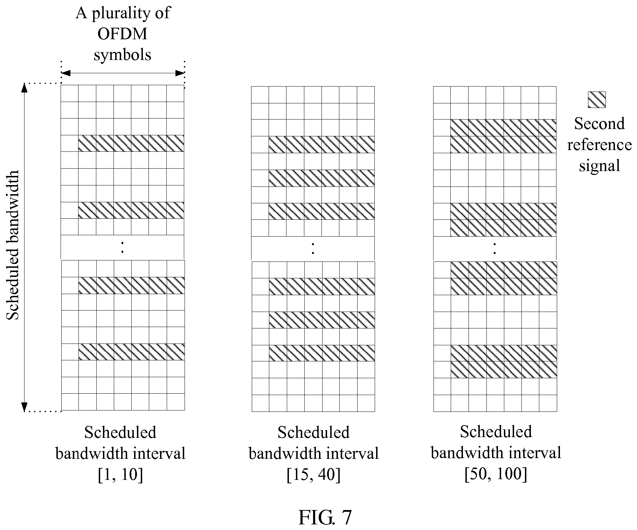

According to the invention, as shown in FIG. 7, second reference signals are distributed within scheduled bandwidth. A range of the scheduled bandwidth may be preset to be in intervals, such as [1, 10], [15, 40], and [50, 100]. A quantity of occupied subcarriers is determined based on the interval to which the scheduled bandwidth belongs. For example, quantities of subcarriers corresponding to the foregoing three intervals are respectively 4, 6, and 8. When the scheduled bandwidth is 5 M, the quantity of occupied subcarriers is 4; when the scheduled bandwidth is 20 M, the quantity of occupied subcarriers is 6; and when the scheduled bandwidth is 60 M, the quantity of occupied subcarriers is 8.

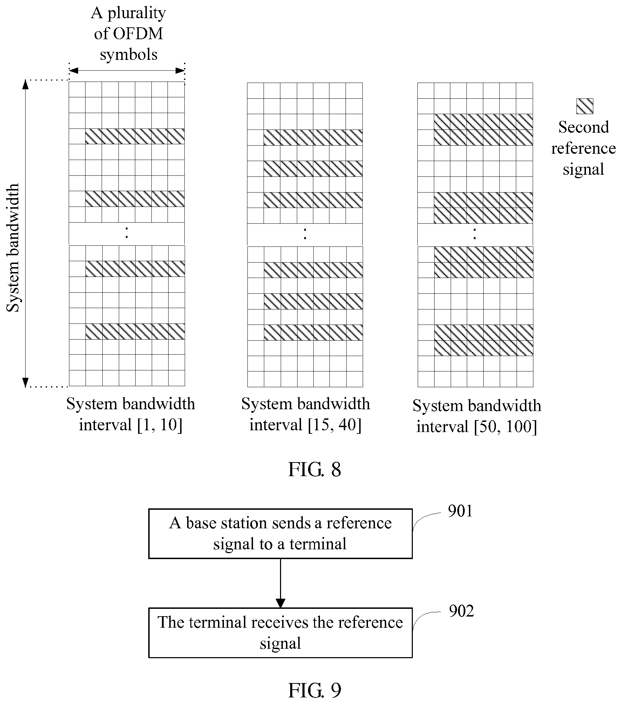

According to the invention, as shown in FIG. 8, second reference signals are distributed within system bandwidth. A range of the system bandwidth may be preset to be in intervals, such as [1, 10], [15, 40], and [50, 100]. A quantity of occupied subcarriers is determined based on the interval to which the system bandwidth belongs. For example, quantities of subcarriers corresponding to the foregoing three intervals are respectively 4, 6, and 8. When the system bandwidth is 5 M, the quantity of occupied subcarriers is 4; when the system bandwidth is 20 M, the quantity of occupied subcarriers is 6; and when the system bandwidth is 60 M, the quantity of occupied subcarriers is 8.

In the foregoing solution, a quantity of subcarriers occupied by the second reference signal is constant, or constant in a range, thereby reducing a quantity of time-frequency resources occupied by reference signals.

Optionally, the second reference signal is used by at least two terminals to estimate one or a combination of the following information: phase noise, phase deflection, and a frequency offset.

Optionally, a quantity of antenna ports of the second group of antenna ports is less than a quantity of antenna ports in the second group of antenna ports.

Optionally, the first group of antenna ports and the second group of antenna ports may be partially overlapped.

Optionally, when the second group of antenna ports include only one antenna port, the second reference signal may be used by a plurality of terminals to estimate one or a combination of the following information: phase noise, phase deflection, and a frequency offset.

Optionally, in a special scenario, when second reference signals on different antenna ports are mapped to a same time-frequency resource, the second reference signal is sent in different sequences on different antenna ports.

Optionally, a sequence of the second reference signal on the second group of antenna ports is determined depending on an antenna port index or an identifier of the terminal. Alternatively, the sequence is specified by the base station.

Optionally, before sending a reference signal, the base station sends an indication signal, where the indication signal is used to indicate at least one of the following information:
whether a user assumes that a precoding weight used by a DM-RS port is the same as a precoding weight used by a PTRS port determined based on the foregoing second type of correspondence; or
whether a user assumes that channel state information of a second type of reference signal port that is determined based on the foregoing second type of correspondence and a DMRS port may be determined based on channel state information of the DMRS port; or
whether a user assumes that channel state information of a DM-RS port is the same as channel state information of a PTRS port determined based on the second type of correspondence.

Optionally, before sending a reference signal, the base station determines transmit power of a second reference signal on an antenna port based on a quantity of antenna ports occupying a same time-frequency resource in the second group of antenna ports.

Specifically, transmit power of a second reference signal on an antenna port is determined based on a quantity of antenna ports occupying a same time-frequency resource. If a quantity of antenna ports multiplexed on a time-frequency resource is M0, and transmit power of a second reference signal on a time-frequency resource element is PDMRS, transmit power of a second reference signal on a resource element on an antenna port is k×PDMRS/M0, where k is a predefined positive real number.

Another method embodiment of the present invention further provides another reference signal transmission method. The method may be applied to the system shown in FIG. 1. The following uses a phase noise reference signal and a demodulation reference signal as an example for description. As shown in FIG. 9, the method includes the following steps.

Step 901: A base station sends a reference signal to a terminal.

The reference signal includes a phase noise reference signal. Optionally, the phase noise reference signal is used to estimate phase noise, phase deflection, or a frequency offset.

A quantity of subcarriers to which the phase noise reference signal is mapped in different scheduled bandwidth ranges is one or more constants, or
a quantity of subcarriers to which the phase noise reference signal is mapped in different system bandwidth ranges is one or more constants.

Step 902: The terminal receives the reference signal.

The terminal may use the phase noise reference signal to estimate the phase noise, the phase deflection, or the frequency offset.

In the foregoing solution, a quantity of subcarriers occupied by the phase noise reference signal is constant, or constant in a range, thereby reducing a quantity of time-frequency resources occupied by reference signals.

For a mapping relationship between the phase noise reference signal and subcarriers, refer to corresponding examples and descriptions of FIG. 5 to FIG. 8 in the foregoing embodiments. Details are not described herein again.

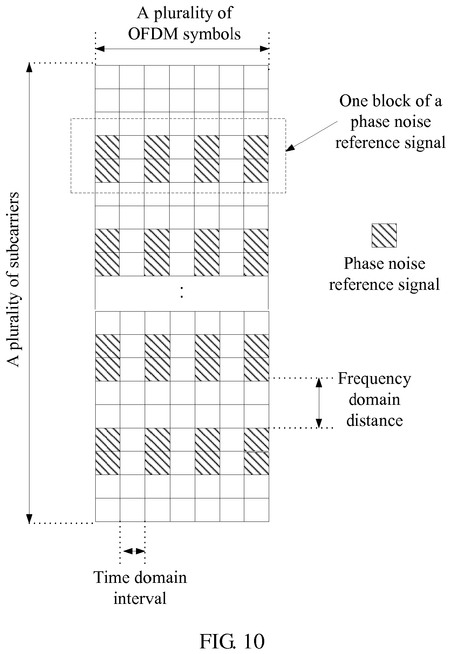

Optionally, in the foregoing embodiment, the phase noise reference signal includes M blocks, each block of the phase noise reference signal is mapped to N continuous subcarriers in frequency domain and is mapped to at least one OFDM symbol at a spacing of K orthogonal frequency division multiplexing OFDM symbols in time domain, a distance between two adjacent blocks of the phase noise reference signal is at least one subcarrier in frequency domain, M is an integer greater than or equal to 2, N is an integer greater than or equal to 1, and K is an integer greater than or equal to 0. FIG. 10 shows an example of mapping a phase noise reference signal to a time-frequency resource.

Optionally, a precoding granularity of the phase noise reference signal is at least one block of the phase noise reference signal.

Optionally, the method further includes: sending, by the base station, the precoding granularity to the terminal.

Optionally, the precoding granularity may be preset.

Optionally, the reference signal further includes a demodulation reference signal DMRS. A start location of the phase noise reference signal and a start location of the DM RS in time domain are on a same OFDM symbol.

Optionally, the sending, by a base station, a reference signal includes: sending, by the base station, the phase noise reference signal on a first group of antenna ports, and sending a DM RS on a second group of antenna ports. The method further includes: sending, by the base station, a correspondence between the first group of ports and the second group of ports to at least two UEs. The first group of antenna ports include at least one antenna port, and the second group of antenna ports include at least one antenna port.

Optionally, the method further includes: sending, by the base station, downlink control information to at least two UEs. The downlink control information includes at least one of the following information: time-domain resource information of the phase noise reference signal, frequency-domain resource information of the phase noise reference signal, and antenna port information used by the phase noise reference signal.

Optionally, the method further includes: scrambling, by the base station, the downlink control information by using a scrambling code before sending the downlink control information.

Optionally, the method further includes: sending, by the base station, the scrambling code to at least two UEs.

Optionally, a first scrambling code is one scrambling code of a preset scrambling code set.

It should be noted that, some or all of the steps or technical details of the solutions of the foregoing different embodiments may be combined for use.

The embodiments of the present invention further provide an apparatus embodiment for implementing the steps and methods in the foregoing method embodiments. The methods, steps, technical details, and technical effects of the method embodiments are also applicable to the apparatus embodiment. Details are not described below.

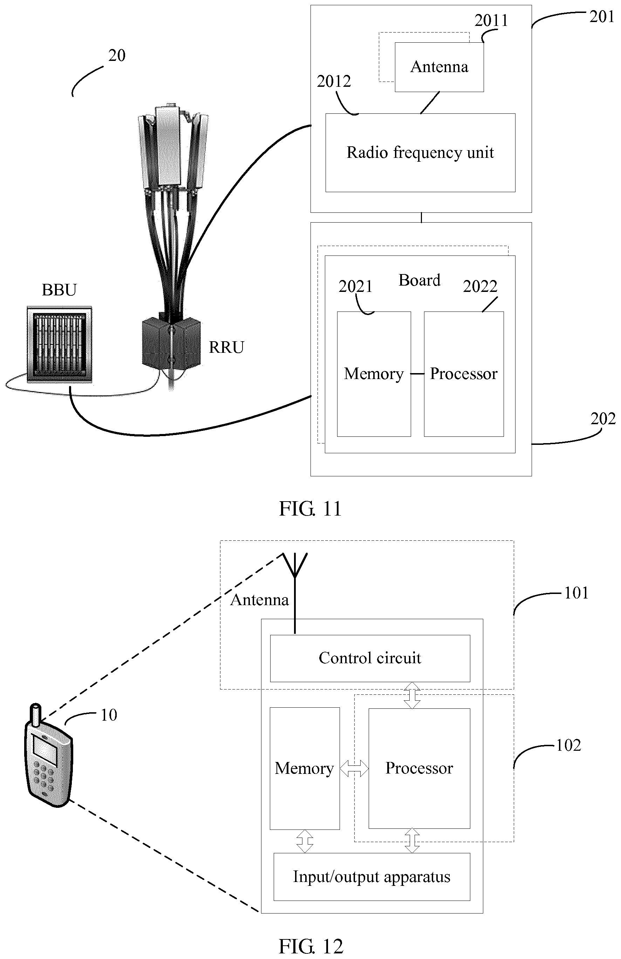

FIG. 11 is a schematic structural diagram of a base station. The base station may be applied to the system shown in FIG. 1. The base station 20 includes one or more remote radio units (remote radio unit, RRU) 201 and one or more baseband units (baseband unit, BBU) 202. The RRU 201 may be referred to as a transceiver unit, a transceiver, a transceiver circuit, a transceiver, or the like. The RRU 201 may include at least one antenna 2011 and a radio frequency unit 2012. The RRU 201 is mainly configured to send and receive a radio frequency signal and perform conversion between the radio frequency signal and a baseband signal, for example, configured to send a signaling indication and/or a reference signal in the foregoing embodiment to a terminal. The BBU 202 is mainly configured to perform baseband processing, base station control, and the like. The RRU 201 and the BBU 202 may be physically disposed together, or may be disposed in a physically separate manner, namely, disposed as a distributed base station.

The BBU 202 is a control center of a base station, may also be referred to as a processing unit, and is mainly configured to implement baseband processing functions, such as channel coding, multiplexing, modulation, and spread spectrum. In an example, the BBU 202 may include one or more boards. A plurality of boards may jointly support a radio access network (such as a 5G network) of a single access standard, or may separately support radio access networks of different access standards. The BBU 202 further includes a memory 2021 and a processor 2022. The memory 2021 is configured to store necessary instructions and data. The processor 2022 is configured to control the base station to perform necessary actions. The memory 2021 and the processor 2022 may serve one or more boards. In other words, a separate memory and processor may be disposed on each board, or a plurality of boards may share a same memory and processor. In addition, a necessary circuit is further disposed on each board.

The base station may be configured to implement the method in the foregoing method embodiment, and details are as follows:

The processor is configured to generate a first reference signal and a second reference signal.

The transceiver is configured to send the first reference signal by using a first group of antenna ports and send the second reference signal by using a second group of antenna ports.

The first group of antenna ports include at least two antenna ports, and the second group of antenna ports include at least two antenna ports.

Second reference signals are mapped to a same time-frequency resource, or
second reference signals sent on the at least two antenna ports in the second group of antenna ports are mapped to a same time-frequency resource.

Optionally, the first reference signal is used for channel estimation, and the second reference signal is used to estimate phase noise, phase deflection, or a frequency offset.

Optionally, the transceiver is further configured to send first signaling, where the first signaling indicates a correspondence between the first group of antenna ports and the second group of antenna ports.

Optionally, the transceiver is further configured to send second signaling, where the second signaling indicates that the first reference signal and the second reference signal belong to a same reference signal type or have a quasi co-location QCL relationship.

Optionally, the transceiver is further configured to send third signaling, where the third signaling indicates a reference signal type of the first reference signal and a reference signal type of the second reference signal.

The base station may also be configured to implement the method in the another method embodiment, and details are as follows:

The processor is configured to map a reference signal to a subcarrier. The reference signal includes a phase noise reference signal; and a quantity of subcarriers to which the phase noise reference signal is mapped in different scheduled bandwidth ranges is one or more constants, or a quantity of subcarriers to which the phase noise reference signal is mapped in different system bandwidth ranges is one or more constants.

The transceiver is configured to send the reference signal.

Optionally, the transceiver is further configured to send a precoding granularity to the terminal.

Optionally, the phase noise reference signal is used to estimate the phase noise, the phase deflection, or the frequency offset.

FIG. 12 is a schematic structural diagram of a terminal. The terminal may be applied to the system shown in FIG. 1. For ease of description, FIG. 12 shows only main components of the terminal. As shown in FIG. 12, the terminal 10 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and the data, for example, store a codebook described in the foregoing embodiment. The control circuit is mainly configured to perform conversion between a baseband signal and a radio frequency signal, and process a radio frequency signal. The control circuit together with the antenna may also be referred to as a transceiver, mainly configured to send and receive a radio frequency signal in an electromagnetic wave form. The input/output apparatus such as a touchscreen, a display screen, or a keyboard is mainly configured to receive data entered by a user and output data to a user.

After the terminal is powered on, the processor may read a software program in a storage unit, interpret and execute an instruction of the software program, and process data of the software program. When data needs to be sent wirelessly, the processor performs baseband processing on to-be-sent data and then outputs a baseband signal to a radio frequency circuit. After performing radio frequency processing on the baseband signal, the radio frequency circuit transmits a radio frequency signal in an electromagnetic wave form by using an antenna. When data is sent to the terminal, the radio frequency circuit receives a radio frequency signal by using the antenna, converts the radio frequency signal to a baseband signal, and outputs the baseband signal to the processor. The processor converts the baseband signal into data and processes the data.

A person skilled in the art may understand that, for ease of description, FIG. 12 shows only one memory and one processor. Actually, the terminal may have a plurality of processors and a plurality of memories. The memory may also be referred to as a storage medium, or a storage device, or the like. This is not limited in the embodiment of the present invention.

In an optional implementation, the processor may include a baseband processor and a central processing unit, where the baseband processor is mainly configured to process a communication protocol and communication data, the central processing unit is mainly configured to control the entire terminal, execute a software program, and process data of the software program. Functions of the baseband processor and the central processing unit are integrated in the processor in FIG. 12. A person skilled in the art may understand that the baseband processor and the central processing unit may alternatively be separate processors that are connected to each other by using a technology such as a bus. A person skilled in the art may understand that, the terminal may include a plurality of baseband processors to adapt to different network standards, the terminal may include a plurality of central processing units to enhance processing capabilities of the terminal, and components of the terminal may be connected by using various buses. The baseband processor may also be expressed as a baseband processing circuit or a baseband processing chip. The central processing unit may also be expressed as a central processing circuit or a central processing chip. A function of processing a communication protocol and communication data may be built into the processor, or may be stored in a storage unit in a software program form, and the processor executes the software program to implement a baseband processing function.

For example, in the embodiments of the present invention, the control circuit and the antenna that have a sending/receiving function may be considered as a transceiver unit 101 of the terminal 10, and the processor having a processing function is considered as a processing unit 102 of the terminal 10. As shown in FIG. 12, the terminal 10 includes the transceiver unit 101 and the processing unit 102. The transceiver unit may also be referred to as a transceiver, a transceiver, a transceiver apparatus, or the like. Optionally, a device configured to implement a receiving function in the transceiver unit 101 may be considered as a receiving unit, and a device configured to implement a sending function in the transceiver unit 101 is considered as a sending unit. In other words, the transceiver unit 101 includes a receiving unit and a sending unit. For example, the receiving unit may also be referred to as a receiver, a receiver, a receiving circuit, or the like, and the sending unit may be referred to as a transmitter, a transmitter, a transmitting circuit, or the like.

The terminal may be configured to implement the method in the foregoing method embodiment, and details are as follows:
The transceiver is configured to receive a first reference signal and a second reference signal sent by a base station, where the first reference signal is sent by the base station by using a first group of antenna ports, the second reference signal is sent by the base station by using a second group of antenna ports, the first group of antenna ports include at least two antenna ports, and the second group of antenna ports include at least two antenna ports; and second reference signals are mapped to a same time-frequency resource, or second reference signals sent on the at least two antenna ports in the second group of antenna ports are mapped to a same time-frequency resource.

Optionally, the processor may be configured to perform channel estimation based on the first reference signal, and estimate, based on the second reference signal, one or a combination of the following information: phase noise, phase deflection, and a frequency offset.

Optionally, the transceiver is further configured to receive first signaling sent by the base station, where the first signaling indicates a correspondence between the first group of antenna ports and the second group of antenna ports.

Optionally, the transceiver is further configured to receive second signaling sent by the base station, where the second signaling indicates that the first reference signal and the second reference signal belong to a same reference signal type or have a quasi co-location QCL relationship.

Optionally, the transceiver is further configured to receive third signaling sent by the base station, where the third signaling indicates a reference signal type of the first reference signal and a reference signal type of the second reference signal.

The terminal may also be configured to implement the method in the another method embodiment, and details are as follows:

The transceiver is configured to receive a reference signal sent by the base station, where the reference signal includes a phase noise reference signal; and a quantity of subcarriers to which the phase noise reference signal is mapped in different scheduled bandwidth ranges is one or more constants, or a quantity of subcarriers to which the phase noise reference signal is mapped in different system bandwidth ranges is one or more constants.

Optionally, the processor may be configured to use the phase noise reference signal to estimate one or a combination of the following information: phase noise, phase deflection, and a frequency offset.

Optionally, the transceiver is further configured to receive a precoding granularity sent by the base station.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any available medium accessible by a computer, or a data storage device, such as a server or a data center, integrating one or more available media. The available medium may be a magnetic medium (for example, a floppy disk, a hard disk, or a magnetic tape), an optical medium (for example, a DVD), a semiconductor medium (for example, a Solid State Disk (SSD)), or the like.

A person skilled in the art may further understand that various illustrative logical blocks (illustrative logical block) and steps (step) that are listed in the embodiments of the present invention may be implemented by using electronic hardware, computer software, or a combination thereof. Whether such functions are implemented by using hardware or software depends on particular applications and a design requirement of the entire system. A person skilled in the art may use various methods to implement the described functions for each particular application, but it should not be considered that the implementation goes beyond the scope of the embodiments of the present invention.

The various illustrative logical units and circuits described in the embodiments of the present invention may implement or operate the described functions by using a general purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general purpose processor may be a microprocessor. Optionally, the general purpose processor may be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in the embodiments of the present invention may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may be connected to a processor so that the processor can read information from the storage medium and write information into the storage medium. Optionally, the storage medium may alternatively be integrated into a processor. The processor and the storage medium may be arranged in an ASIC, and the ASIC may be arranged in UE. Optionally, the processor and the storage medium may be arranged in different components of the UE.

In one or more example designs, the functions described in the embodiments of the present invention may be implemented by using hardware, software, firmware, or any combination thereof. If the functions are implemented by software, these functions may be stored in a computer-readable medium or are transmitted to the computer-readable medium in a form of one or more instructions or codes. The computer-readable medium is either a computer storage medium or a communications medium that enables a computer program to move from one place to another. The storage medium may be an available medium that may be accessed by any general purpose computer or special computer. For example, such a computer-readable medium may include but is not limited to a RAM, a ROM, an EEPROM, a CD-ROM, or another optical disc storage, a disk storage or another magnetic storage apparatus, or any other medium that may be configured to carry or store program code, where the program code is in a form of an instruction or a data structure or in a form that may be read by a general purpose computer or special computer or a general purpose processor or special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in a defined computer-readable medium. The disc (disk) and the disk (disc) include a compressed disk, a laser disc, an optical disc, a DVD, a floppy disk, and a Blu-ray disc. The disk generally copies data by a magnetic means, and the disc generally copies data optically by a laser means. The foregoing combination may also be included in the computer-readable medium.

According to the foregoing description of this specification in the present invention, technologies in the art may use or implement the content of the present invention.

## Claims

1. A reference signal sending method, performed by a base station, wherein the method comprises:
sending (201) a first reference signal and a second reference signal to a terminal (10), wherein the first reference signal is sent by using a first group of antenna ports, the second reference signal is sent by using a second group of antenna ports, the first group of antenna ports include at least two antenna ports, and the second group of antenna ports include at least two antenna ports, wherein second reference signals sent on the at least two antenna ports in the second group of antenna ports are mapped to a same time-frequency resource, and wherein the second reference signal comprises a phase noise reference signal, and
the second reference signals are distributed within a scheduled bandwidth, a range of a scheduled bandwidth is preset to be in different scheduled bandwidth intervals of different sizes and a quantity of subcarriers to which the phase noise reference signal is mapped in the preset different scheduled bandwidth intervals is one or more constants, wherein the quantity of subcarriers is determined based on the interval to which the scheduled bandwidth belongs,
or
the second reference signals are distributed within a system bandwidth, a range of a system bandwidth is preset to be in different system bandwidth intervals of different sizes, and a quantity of subcarriers to which the phase noise reference signal is mapped in the preset different system bandwidth intervals is one or more constants, wherein the quantity of subcarriers is determined based on the interval to which the system bandwidth belongs.

2. The method according to claim 1, wherein
the phase noise reference signal comprises M blocks, each block of the phase noise reference signal is mapped to N continuous subcarriers in frequency domain and is mapped to at least one OFDM symbol at a spacing of K orthogonal frequency division multiplexing OFDM symbols in time domain, a distance between two adjacent blocks of the phase noise reference signal is at least one subcarrier in frequency domain, M is an integer greater than or equal to 2, N is an integer greater than or equal to 1, and K is an integer greater than or equal to 0.

3. A reference signal receiving method, performed by a terminal,
wherein the method comprises:
receiving (202) a first reference signal and a second reference signal from a base station (20), wherein the first reference signal is sent by the base station by using a first group of antenna ports, the second reference signal is sent by the base station by using a second group of antenna ports, the first group of antenna ports include at least two antenna ports, and the second group of antenna ports include at least two antenna ports, wherein second reference signals sent on the at least two antenna ports in the second group of antenna ports are mapped to a same time-frequency resource, and wherein the second reference signal comprises a phase noise reference signal, and
the second reference signals are distributed within a scheduled bandwidth, a range of a scheduled bandwidth is preset to be in different scheduled bandwidth intervals of different sizes and a quantity of subcarriers to which the phase noise reference signal is mapped in the preset different scheduled bandwidth intervals is one or more constants, wherein the quantity of subcarriers is determined based on the interval to which the scheduled bandwidth belongs, or
the second reference signals are distributed within a system bandwidth, a range of a system bandwidth is preset to be in different system bandwidth intervals of different sizes, and a quantity of subcarriers to which the phase noise reference signal is mapped in the preset different system bandwidth intervals is one or more constants, wherein the quantity of subcarriers is determined based on the interval to which the system bandwidth belongs.

4. The method according to claim 3, wherein
the phase noise reference signal comprises M blocks, each block of the phase noise reference signal is mapped to N continuous subcarriers in frequency domain and is mapped to at least one OFDM symbol at a spacing of K orthogonal frequency division multiplexing OFDM symbols in time domain, a distance between two adjacent blocks of the phase noise reference signal is at least one subcarrier in frequency domain, M is an integer greater than or equal to 2, N is an integer greater than or equal to 1, and K is an integer greater than or equal to 0.

5. A base station (20), comprising:
a processing unit (2022), configured to generate a first reference signal and a second reference signal; and
a transceiver unit (201), configured to send the first reference signal by using a first group of antenna ports and send the second reference signal by using a second group of antenna ports, wherein the first group of antenna ports include at least two antenna ports, and the second group of antenna ports include at least two antenna ports, second reference signals sent on the at least two antenna ports in the second group of antenna ports are mapped to a same time-frequency resource;
wherein the processing unit (2022) is further configured to map the second reference signal to a subcarrier, wherein the reference signal comprises a phase noise reference signal, the second reference signals are distributed within a scheduled bandwidth, a range of a scheduled bandwidth is preset to be in different scheduled bandwidth intervals of different sizes and a quantity of subcarriers to which the phase noise reference signal is mapped in the preset different scheduled bandwidth intervals is one or more constants, wherein the quantity of subcarriers is determined based on the interval to which the scheduled bandwidth belongs, or the second reference signals are distributed within a system bandwidth, a range of a system bandwidth is preset to be in different system bandwidth intervals of different sizes, and a quantity of subcarriers to which the phase noise reference signal is mapped in the preset different system bandwidth intervals is one or more constants, wherein the quantity of subcarriers is determined based on the interval to which the system bandwidth belongs.

6. The base station according to claim 5, wherein:
the phase noise reference signal comprises M blocks, each block of the phase noise reference signal is mapped to N continuous subcarriers in frequency domain and is mapped to at least one OFDM symbol at a spacing of K orthogonal frequency division multiplexing OFDM symbols in time domain, a distance between two adjacent blocks of the phase noise reference signal is at least one subcarrier in frequency domain, M is an integer greater than or equal to 2, N is an integer greater than or equal to 1, and K is an integer greater than or equal to 0.

7. A terminal (10), comprising:
a transceiver unit (101), configured to receive a first reference signal and a second reference signal from a base station, wherein the first reference signal is sent by the base station by using a first group of antenna ports, the second reference signal is sent by the base station by using a second group of antenna ports, the first group of antenna ports include at least two antenna ports, and the second group of antenna ports include at least two antenna ports, and second reference signals sent on the at least two antenna ports in the second group of antenna ports are mapped to a same time-frequency resource; and wherein the second reference signal comprises a phase noise reference signal, the second reference signals are distributed within a scheduled bandwidth, a range of a scheduled bandwidth is preset to be in different scheduled bandwidth intervals of different sizes and a quantity of subcarriers to which the phase noise reference signal is mapped in the preset different scheduled bandwidth intervals is one or more constants, wherein the quantity of subcarriers is determined based on the interval to which the scheduled bandwidth belongs, or the second reference signals are distributed within a system bandwidth, a range of a system bandwidth is preset to be in different system bandwidth intervals of different sizes, and a quantity of subcarriers to which the phase noise reference signal is mapped in the preset different system bandwidth intervals is one or more constants, wherein the quantity of subcarriers is determined based on the interval to which the system bandwidth belongs, and
a processing unit (102), configured to perform channel estimation based on the first reference signal, and use the phase noise reference signal to estimate one or a combination of the following information: phase noise, phase deflection, and a frequency offset.

8. The terminal according to claim 7, wherein
the phase noise reference signal comprises M blocks, each block of the phase noise reference signal is mapped to N continuous subcarriers in frequency domain and is mapped to at least one OFDM symbol at a spacing of K orthogonal frequency division multiplexing OFDM symbols in time domain, a distance between two adjacent blocks of the phase noise reference signal is at least one subcarrier in frequency domain, M is an integer greater than or equal to 2, N is an integer greater than or equal to 1, and K is an integer greater than or equal to 0.

9. A communications apparatus for a base station, comprising at least one processor, wherein the at least one processor is coupled to a memory and configured to cause the base station to perform the method of any of claims 1-2.

10. A communication apparatus for a terminal, comprising at least one processor, wherein the at least one processor is coupled to a memory and configured to cause the terminal to perform the method of any of claims 3-4.

11. The communications apparatus according to claim 10, wherein
a precoding granularity of the phase noise reference signal is at least one block of the phase noise reference signal.

12. A computer readable storage medium, comprising an instruction, wherein when the instruction is run on a computer, the computer performs the method according to any one of claims 1 to 4.

13. A computer program product comprising an instruction, wherein when the computer program product is run on a computer, the computer performs the method according to any one of claims 1 to 4.

## Patentansprüche

1. Referenzsignalsendeverfahren, das durch eine Basisstation durchgeführt wird, wobei das Verfahren Folgendes umfasst:
Senden (201) eines ersten Referenzsignals und eines zweiten Referenzsignals an ein Endgerät (10), wobei das erste Referenzsignal unter Verwendung einer ersten Gruppe von Antennenanschlüssen gesendet wird, das zweite Referenzsignal unter Verwendung einer zweiten Gruppe von Antennenanschlüssen gesendet wird, die erste Gruppe von Antennenanschlüssen mindestens zwei Antennenanschlüsse umfasst und die zweite Gruppe von Antennenanschlüssen mindestens zwei Antennenanschlüsse beinhaltet, wobei zweite Referenzsignale, die an die mindestens zwei Antennenanschlüsse in der zweiten Gruppe von Antennenanschlüssen gesendet werden, auf derselben Zeit-Frequenz-Ressource abgebildet sind, und wobei das zweite Referenzsignal ein Phasenrausch-Referenzsignal umfasst, und
die zweiten Referenzsignale innerhalb einer geplanten Bandbreite verteilt sind, ein Bereich einer geplanten Bandbreite voreingestellt ist, um in unterschiedlichen geplanten Bandbreitenintervallen unterschiedlicher Größe zu liegen, und eine Menge von Unterträgern, auf welcher das Phasenrausch-Referenzsignal in den voreingestellten unterschiedlichen geplanten Bandbreitenintervallen abgebildet ist, eine oder mehrere Konstanten ist, wobei die Menge von Unterträgern basierend auf dem Intervall bestimmt wird, zu welchem die geplante Bandbreite gehört, oder
die zweiten Referenzsignale innerhalb einer Systembandbreite verteilt sind, ein Bereich einer Systembandbreite voreingestellt ist, um in unterschiedlichen Systembandbreitenintervallen unterschiedlicher Größe zu liegen, und eine Menge von Unterträgern, auf welcher das Phasenrausch-Referenzsignal in den voreingestellten unterschiedlichen Systembandbreitenintervallen abgebildet ist, eine oder mehrere Konstanten ist, wobei die Menge von Unterträgern basierend auf dem Intervall bestimmt wird, zu welchem die Systembandbreite gehört.

2. Verfahren nach Anspruch 1, wobei
das Phasenrausch-Referenzsignal M Blöcke umfasst, jeder Block des Phasenrausch-Referenzsignals auf N kontinuierlichen Unterträgern im Frequenzbereich abgebildet ist und auf mindestens einem OFDM-Symbol in einem Abstand von K orthogonalen Frequenzmultiplexsymbolen, OFDM-Symbolen, im Zeitbereich abgebildet ist, ein Abstand zwischen zwei benachbarten Blöcken des Phasenrausch-Referenzsignals mindestens ein Unterträger im Frequenzbereich ist, M eine ganze Zahl größer oder gleich 2 ist, N eine ganze Zahl größer oder gleich 1 ist und K eine ganze Zahl größer oder gleich 0 ist.

3. Referenzsignalempfangsverfahren, das durch ein Endgerät durchgeführt wird, wobei das Verfahren Folgendes umfasst:
Empfangen (202) eines ersten Referenzsignals und eines zweiten Referenzsignals von einer Basisstation (20), wobei das erste Referenzsignal unter Verwendung einer ersten Gruppe von Antennenanschlüssen durch die Basisstation gesendet wird, das zweite Referenzsignal unter Verwendung einer zweiten Gruppe von Antennenanschlüssen durch die Basisstation gesendet wird, die erste Gruppe von Antennenanschlüssen mindestens zwei Antennenanschlüsse umfasst und die zweite Gruppe von Antennenanschlüssen mindestens zwei Antennenanschlüsse beinhaltet, wobei zweite Referenzsignale, die an die mindestens zwei Antennenanschlüsse in der zweiten Gruppe von Antennenanschlüssen gesendet werden, auf derselben Zeit-Frequenz-Ressource abgebildet sind, und wobei das zweite Referenzsignal ein Phasenrausch-Referenzsignal umfasst, und
die zweiten Referenzsignale innerhalb einer geplanten Bandbreite verteilt sind, ein Bereich einer geplanten Bandbreite voreingestellt ist, um in unterschiedlichen geplanten Bandbreitenintervallen unterschiedlicher Größe zu liegen, und eine Menge von Unterträgern, auf welcher das Phasenrausch-Referenzsignal in den voreingestellten unterschiedlichen geplanten Bandbreitenintervallen abgebildet ist, eine oder mehrere Konstanten ist, wobei die Menge von Unterträgern basierend auf dem Intervall bestimmt wird, zu welchem die geplante Bandbreite gehört, oder
die zweiten Referenzsignale innerhalb einer Systembandbreite verteilt sind, ein Bereich einer Systembandbreite voreingestellt ist, um in unterschiedlichen Systembandbreitenintervallen unterschiedlicher Größe zu liegen, und eine Menge von Unterträgern, auf welcher das Phasenrausch-Referenzsignal in den voreingestellten unterschiedlichen Systembandbreitenintervallen abgebildet ist, eine oder mehrere Konstanten ist, wobei die Menge von Unterträgern basierend auf dem Intervall bestimmt wird, zu welchem die Systembandbreite gehört.

4. Verfahren nach Anspruch 3, wobei
das Phasenrausch-Referenzsignal M Blöcke umfasst, jeder Block des Phasenrausch-Referenzsignals auf N kontinuierlichen Unterträgern im Frequenzbereich abgebildet ist und auf mindestens einem OFDM-Symbol in einem Abstand von K orthogonalen Frequenzmultiplexsymbolen, OFDM-Symbolen, im Zeitbereich abgebildet ist, ein Abstand zwischen zwei benachbarten Blöcken des Phasenrausch-Referenzsignals mindestens ein Unterträger im Frequenzbereich ist, M eine ganze Zahl größer oder gleich 2 ist, N eine ganze Zahl größer oder gleich 1 ist und K eine ganze Zahl größer oder gleich 0 ist.

5. Basisstation (20), umfassend:
eine Verarbeitungseinheit (2022), die dazu konfiguriert ist, ein erstes Referenzsignal und ein zweites Referenzsignal zu generieren; und
eine Sende-Empfangseinheit (201), die dazu konfiguriert ist,
das erste Referenzsignal unter Verwendung einer ersten Gruppe von Antennenanschlüssen zu senden und das zweite Referenzsignal unter Verwendung einer zweiten Gruppe von Antennenanschlüssen zu senden, wobei die erste Gruppe von Antennenanschlüssen mindestens zwei Antennenanschlüsse beinhaltet und die zweite Gruppe von Antennenanschlüssen mindestens zwei Antennenanschlüsse beinhaltet, wobei zweite Referenzsignale, die an die mindestens zwei Antennenanschlüsse in der zweiten Gruppe von Antennenanschlüssen gesendet werden, auf derselben Zeit-Frequenz-Ressource abgebildet sind;
wobei die Verarbeitungseinheit (2022) ferner dazu konfiguriert ist, das zweite Referenzsignal auf einem Unterträger abzubilden, wobei das Referenzsignal ein Phasenrausch-Referenzsignal umfasst, die zweiten Referenzsignale innerhalb einer geplanten Bandbreite verteilt sind, ein Bereich einer geplanten Bandbreite voreingestellt ist, um in unterschiedlichen geplanten Bandbreitenintervallen unterschiedlicher Größe zu liegen, und eine Menge von Unterträgern, auf welcher das Phasenrausch-Referenzsignal in den voreingestellten unterschiedlichen geplanten Bandbreitenintervallen abgebildet ist, eine oder mehrere Konstanten ist, wobei die Menge von Unterträgern basierend auf dem Intervall, zu welchem die geplante Bandbreite gehört, bestimmt wird, oder die zweiten Referenzsignale innerhalb einer Systembandbreite verteilt sind, ein Bereich einer Systembandbreite voreingestellt ist, um in unterschiedlichen Systembandbreitenintervallen unterschiedlicher Größe zu liegen, und eine Menge von Unterträgern, auf welcher das Phasenrausch-Referenzsignal in den voreingestellten unterschiedlichen Systembandbreitenintervallen abgebildet ist, eine oder mehrere Konstanten ist, wobei die Menge von Unterträgern basierend auf dem Intervall, zu welchem die Systembandbreite gehört, bestimmt wird.

6. Basisstation nach Anspruch 5, wobei:
das Phasenrausch-Referenzsignal M Blöcke umfasst, jeder Block des Phasenrausch-Referenzsignals auf N kontinuierlichen Unterträgern im Frequenzbereich abgebildet ist und auf mindestens einem OFDM-Symbol in einem Abstand von K orthogonalen Frequenzmultiplexsymbolen, OFDM-Symbolen, im Zeitbereich abgebildet ist, ein Abstand zwischen zwei benachbarten Blöcken des Phasenrausch-Referenzsignals mindestens ein Unterträger im Frequenzbereich ist, M eine ganze Zahl größer oder gleich 2 ist, N eine ganze Zahl größer oder gleich 1 ist und K eine ganze Zahl größer oder gleich 0 ist.

7. Endgerät (10), umfassend:
eine Sende-Empfangseinheit (101), die dazu konfiguriert ist, ein erstes Referenzsignal und ein zweites Referenzsignal von einer Basisstation zu empfangen, wobei das erste Referenzsignal unter Verwendung einer ersten Gruppe von Antennenanschlüssen durch die Basisstation gesendet wird, das zweite Referenzsignal unter Verwendung einer zweiten Gruppe von Antennenanschlüssen durch die Basisstation gesendet wird, die erste Gruppe von Antennenanschlüssen mindestens zwei Antennenanschlüsse beinhaltet und die zweite Gruppe von Antennenanschlüssen mindestens zwei Antennenanschlüsse beinhaltet, und zweite Referenzsignale, die an die mindestens zwei Antennenanschlüsse in der zweiten Gruppe von Antennenanschlüssen gesendet werden, auf derselben Zeit-Frequenz-Ressource abgebildet sind; und wobei das zweite Referenzsignal ein Phasenrausch-Referenzsignal umfasst, die zweiten Referenzsignale innerhalb einer geplanten Bandbreite verteilt sind, ein Bereich einer geplanten Bandbreite voreingestellt ist, um in unterschiedlichen geplanten Bandbreitenintervallen unterschiedlicher Größe zu liegen, und eine Menge von Unterträgern, auf welcher das Phasenrausch-Referenzsignal in den voreingestellten unterschiedlichen geplanten Bandbreitenintervallen abgebildet ist, eine oder mehrere Konstanten ist, wobei die Menge von Unterträgern basierend auf dem Intervall bestimmt wird, zu welchem die geplante Bandbreite gehört, oder die zweiten Referenzsignale innerhalb einer Systembandbreite verteilt sind, ein Bereich einer Systembandbreite voreingestellt ist, um in unterschiedlichen Systembandbreitenintervallen unterschiedlicher Größe zu liegen, und eine Menge von Unterträgern, auf welcher das Phasenrausch-Referenzsignal in den voreingestellten unterschiedlichen Systembandbreitenintervallen abgebildet ist, eine oder mehrere Konstanten ist, wobei die Menge von Unterträgern basierend auf dem Intervall bestimmt wird, zu welchem die Systembandbreite gehört, und
eine Verarbeitungseinheit (102), die dazu konfiguriert ist, eine Kanalabschätzung basierend auf dem ersten Referenzsignal durchzuführen und das Phasenrausch-Referenzsignal zu verwenden, um eine oder eine Kombination der folgenden Informationen abzuschätzen: Phasenrauschen, Phasenablenkung und einen Frequenzversatz.

8. Endgerät nach Anspruch 7, wobei
das Phasenrausch-Referenzsignal M Blöcke umfasst, jeder Block des Phasenrausch-Referenzsignals auf N kontinuierlichen Unterträgern im Frequenzbereich abgebildet ist und auf mindestens einem OFDM-Symbol in einem Abstand von K orthogonalen Frequenzmultiplexsymbolen, OFDM-Symbolen, im Zeitbereich abgebildet ist, ein Abstand zwischen zwei benachbarten Blöcken des Phasenrausch-Referenzsignals mindestens ein Unterträger im Frequenzbereich ist, M eine ganze Zahl größer oder gleich 2 ist, N eine ganze Zahl größer oder gleich 1 ist und K eine ganze Zahl größer oder gleich 0 ist.

9. Kommunikationsvorrichtung für eine Basisstation, umfassend mindestens einen Prozessor, wobei der mindestens eine Prozessor mit einem Speicher gekoppelt und dazu konfiguriert ist, zu bewirken, dass die Basisstation das Verfahren nach einem der Ansprüche 1-2 durchführt.

10. Kommunikationsvorrichtung für ein Endgerät, umfassend mindestens einen Prozessor, wobei der mindestens eine Prozessor mit einem Speicher verbunden und dazu konfiguriert ist, zu bewirken, dass das Endgerät das Verfahren nach einem der Ansprüche 3-4 durchführt.

11. Kommunikationsvorrichtung nach Anspruch 10, wobei
eine Vorcodierungsgranularität des Phasenrausch-Referenzsignals mindestens ein Block des Phasenrausch-Referenzsignals ist.

12. Computerlesbares Speichermedium, umfassend eine Anweisung, wobei, wenn die Anweisung auf einem Computer ausgeführt wird, der Computer das Verfahren nach einem der Ansprüche 1 bis 4 durchführt.

13. Computerprogrammprodukt, umfassend eine Anweisung, wobei, wenn das Computerprogrammprodukt auf einem Computer ausgeführt wird, der Computer das Verfahren nach einem Ansprüche 1 bis 4 durchführt.

## Revendications

1. Procédé d'envoi de signal de référence, exécuté par une station de base, dans lequel le procédé comprend :
l'envoi (201) d'un premier signal de référence et d'un second signal de référence à un terminal (10), dans lequel le premier signal de référence est envoyé à l'aide d'un premier groupe de ports d'antenne, le second signal de référence est envoyé à l'aide d'un second groupe de ports d'antenne, le premier groupe de ports d'antenne comprend au moins deux ports d'antenne, et le second groupe de ports d'antenne comprend au moins deux ports d'antenne, dans lequel les seconds signaux de référence envoyés sur les au moins deux ports d'antenne du second groupe de ports d'antenne sont mappés sur une même ressource de temps-fréquence, et dans lequel le second signal de référence comprend un signal de référence de bruit de phase, et
les seconds signaux de référence sont distribués dans une bande passante programmée, une plage d'une bande passante programmée est prédéfinie pour être dans différents intervalles de bande passante programmée de différentes tailles et une quantité de sous-porteuses sur lesquelles le signal de référence de bruit de phase est mappé dans les différents intervalles de bande passante programmée prédéfinis est une ou plusieurs constantes, dans lequel la quantité de sous-porteuses est déterminée sur la base de l'intervalle auquel appartient la bande passante programmée, ou
les seconds signaux de référence sont distribués dans une bande passante système, une plage d'une bande passante système est prédéfinie pour être dans différents intervalles de bande passante système de différentes tailles et une quantité de sous-porteuses sur lesquelles le signal de référence de bruit de phase est mappé dans les différents intervalles de bande passante système prédéfinis est une ou plusieurs constantes, dans lequel la quantité de sous-porteuses est déterminée sur la base de l'intervalle auquel appartient la bande passante système.

2. Procédé selon la revendication 1, dans lequel
le signal de référence de bruit de phase comprend M blocs, chaque bloc du signal de référence de bruit de phase est mappé sur N sous-porteuses continues dans le domaine fréquentiel et est mappé sur au moins un symbole OFDM à un espacement de K symboles de multiplexage par répartition de fréquence orthogonale, OFDM, dans le domaine temporel, une distance entre deux blocs adjacents du signal de référence de bruit de phase est d'au moins une sous-porteuse dans le domaine fréquentiel, M est un entier supérieur ou égal à 2, N est un entier supérieur ou égal à 1, et K est un entier supérieur ou égal à 0.

3. Procédé de réception de signal de référence, exécuté par un terminal, dans lequel le procédé comprend :
la réception (202) d'un premier signal de référence et d'un second signal de référence en provenance d'une station de base (20), dans lequel le premier signal de référence est envoyé par la station de base à l'aide d'un premier groupe de ports d'antenne, le second signal de référence est envoyé par la station de base à l'aide d'un second groupe de ports d'antenne, le premier groupe de ports d'antenne comprend au moins deux ports d'antenne, et le second groupe de ports d'antenne comprend au moins deux ports d'antenne, dans lequel les seconds signaux de référence envoyés sur les au moins deux ports d'antenne du second groupe de ports d'antenne sont mappés sur une même ressource de temps-fréquence, et dans lequel le second signal de référence comprend un signal de référence de bruit de phase, et
les seconds signaux de référence sont distribués dans une bande passante programmée, une plage d'une bande passante programmée est prédéfinie pour être dans différents intervalles de bande passante programmée de différentes tailles et une quantité de sous-porteuses sur lesquelles le signal de référence de bruit de phase est mappé dans les différents intervalles de bande passante programmée prédéfinis est une ou plusieurs constantes, dans lequel la quantité de sous-porteuses est déterminée sur la base de l'intervalle auquel appartient la bande passante programmée, ou
les seconds signaux de référence sont distribués dans une bande passante système, une plage d'une bande passante système est prédéfinie pour être dans différents intervalles de bande passante système de différentes tailles et une quantité de sous-porteuses sur lesquelles le signal de référence de bruit de phase est mappé dans les différents intervalles de bande passante système prédéfinis est une ou plusieurs constantes, dans lequel la quantité de sous-porteuses est déterminée sur la base de l'intervalle auquel appartient la bande passante système.

4. Procédé selon la revendication 3, dans lequel
le signal de référence de bruit de phase comprend M blocs, chaque bloc du signal de référence de bruit de phase est mappé sur N sous-porteuses continues dans le domaine fréquentiel et est mappé sur au moins un symbole OFDM à un espacement de K symboles de multiplexage par répartition de fréquence orthogonale, OFDM, dans le domaine temporel, une distance entre deux blocs adjacents du signal de référence de bruit de phase est d'au moins une sous-porteuse dans le domaine fréquentiel, M est un entier supérieur ou égal à 2, N est un entier supérieur ou égal à 1, et K est un entier supérieur ou égal à **0.**

5. Station de base (20), comprenant :
une unité de traitement (2022), configurée pour générer un premier signal de référence et un second signal de référence ; et
une unité d'émission-réception (201), configurée pour envoyer le premier signal de référence à l'aide d'un premier groupe de ports d'antenne et envoyer le second signal de référence à l'aide d'un second groupe de ports d'antenne, dans laquelle le premier groupe de ports d'antenne comprend au moins deux ports d'antenne, et le second groupe de ports d'antenne comprend au moins deux ports d'antenne, les seconds signaux de référence envoyés sur les au moins deux ports d'antenne dans le second groupe de ports d'antenne sont mappés sur une même ressource de temps-fréquence ;
dans laquelle l'unité de traitement (2022) est également configurée pour mapper le second signal de référence à une sous-porteuse, dans laquelle le signal de référence comprend un signal de référence de bruit de phase, les seconds signaux de référence sont distribués dans une bande passante programmée, une plage d'une bande passante programmée est prédéfinie pour être dans différents intervalles de bande passante programmée de différentes tailles et une quantité de sous-porteuses auxquelles le signal de référence de bruit de phase est mappé dans les différents intervalles de bande passante programmée prédéfinis est une ou plusieurs constantes, dans laquelle la quantité de sous-porteuses est déterminée sur la base de l'intervalle auquel appartient la bande passante programmée, ou les seconds signaux de référence sont distribués dans une bande passante système, une plage d'une bande passante système est prédéfinie pour être dans différents intervalles de bande passante système de différentes tailles, et une quantité de sous-porteuses auxquelles le signal de référence de bruit de phase est mappé dans les différents intervalles de bande passante système prédéfinis est une ou plusieurs constantes, dans laquelle la quantité de sous-porteuses est déterminée sur la base de l'intervalle auquel appartient la bande passante système.

6. Station de base selon la revendication 5, dans laquelle :
le signal de référence de bruit de phase comprend M blocs, chaque bloc du signal de référence de bruit de phase est mappé sur N sous-porteuses continues dans le domaine fréquentiel et est mappé sur au moins un symbole OFDM à un espacement de K symboles de multiplexage par répartition de fréquence orthogonale, OFDM, dans le domaine temporel, une distance entre deux blocs adjacents du signal de référence de bruit de phase est d'au moins une sous-porteuse dans le domaine fréquentiel, M est un entier supérieur ou égal à 2, N est un entier supérieur ou égal à 1, et K est un entier supérieur ou égal à 0.

7. Terminal (10), comprenant :
une unité d'émission-réception (101), configurée pour recevoir un premier signal de référence et un second signal de référence d'une station de base, dans lequel le premier signal de référence est envoyé par la station de base à l'aide d'un premier groupe de ports d'antenne, le second signal de référence est envoyé par la station de base à l'aide d'un second groupe de ports d'antenne, le premier groupe de ports d'antenne comprend au moins deux ports d'antenne, et le second groupe de ports d'antenne comprend au moins deux ports d'antenne, et les seconds signaux de référence envoyés sur les au moins deux ports d'antenne du second groupe de ports d'antenne sont mappés sur une même ressource de temps-fréquence ; et dans lequel le second signal de référence comprend un signal de référence de bruit de phase, les seconds signaux de référence sont distribués dans une bande passante programmée, une plage d'une bande passante programmée est prédéfinie pour être dans différents intervalles de bande passante programmée de différentes tailles et une quantité de sous-porteuses sur lesquelles le signal de référence de bruit de phase est mappé dans les différents intervalles de bande passante programmée prédéfinis est une ou plusieurs constantes, dans lequel la quantité de sous-porteuses est déterminée sur la base de l'intervalle auquel appartient la bande passante programmée, ou les seconds signaux de référence sont distribués dans une bande passante système, une plage d'une bande passante système est prédéfinie pour être dans différents intervalles de bande passante système de différentes tailles et une quantité de sous-porteuses sur lesquelles le signal de référence de bruit de phase est mappé dans les différents intervalles de bande passante système prédéfinis est une ou plusieurs constantes, dans lequel la quantité de sous-porteuses est déterminée sur la base de l'intervalle auquel appartient la bande passante système, et
une unité de traitement (102), configurée pour effectuer une estimation de canal sur la base du premier signal de référence, et utiliser le signal de référence de bruit de phase pour estimer des informations ou une combinaison des informations suivantes : bruit de phase, déviation de phase et décalage de fréquence.

8. Terminal selon la revendication 7, dans lequel
le signal de référence de bruit de phase comprend M blocs, chaque bloc du signal de référence de bruit de phase est mappé sur N sous-porteuses continues dans le domaine fréquentiel et est mappé sur au moins un symbole OFDM à un espacement de K symboles de multiplexage par répartition de fréquence orthogonale, OFDM, dans le domaine temporel, une distance entre deux blocs adjacents du signal de référence de bruit de phase est d'au moins une sous-porteuse dans le domaine fréquentiel, M est un entier supérieur ou égal à 2, N est un entier supérieur ou égal à 1, et K est un entier supérieur ou égal à 0.

9. Appareil de communication pour une station de base, comprenant au moins un processeur, dans lequel l'au moins un processeur est couplé à une mémoire et configuré pour amener la station de base à exécuter le procédé selon l'une quelconque des revendications 1 et 2.

10. Appareil de communication pour un terminal, comprenant au moins un processeur, dans lequel l'au moins un processeur est couplé à une mémoire et configuré pour amener le terminal à exécuter le procédé selon l'une quelconque des revendications 3 et 4.

11. Appareil de communication selon la revendication 10, dans lequel
une granularité de précodage du signal de référence de bruit de phase est au moins un bloc du signal de référence de bruit de phase.

12. Support de stockage lisible par ordinateur, comprenant une instruction, dans lequel, lorsque l'instruction est exécutée sur un ordinateur, l'ordinateur exécute le procédé selon l'une quelconque des revendications 1 à 4.

13. Produit de programme informatique comprenant une instruction, dans lequel, lorsque le produit de programme informatique est exécuté sur un ordinateur, l'ordinateur exécute le procédé selon l'une quelconque des revendications 1 à 4.
